(19) Europäisches Patentamt

European Patent Office

Office européen des brevets

(11) **EP 0 837 546 B1**

(12) **EUROPEAN PATENT SPECIFICATION**

(45) Date of publication and mention
of the grant of the patent:
**11.01.2006 Bulletin 2006/02**

(51) Int Cl.:
*H02M 3/335* (2006.01)    *H04N 3/185* (2006.01)
*H02M 1/12* (2006.01)

(21) Application number: **98100494.8**

(22) Date of filing: **15.11.1994**

(54) **Power circuit**

Leistungsschaltung

Circuit de puissance

(84) Designated Contracting States:
**DE FR GB**

(30) Priority: **15.11.1993 JP 28505993**

(43) Date of publication of application:
**22.04.1998 Bulletin 1998/17**

(62) Document number(s) of the earlier application(s) in
accordance with Art. 76 EPC:
**94308434.3 / 0 653 831**

(73) Proprietor: **KABUSHIKI KAISHA TOSHIBA**
**Kawasaki-shi,**
**Kanagawa-ken 210-8572 (JP)**

(72) Inventor: **Ochiai, Masashi**
**1-1 Shibaura 1-chome**
**Minato-ku**
**Tokyo 105 (JP)**

(74) Representative: **Muir, Ian Robertson**
**Haseltine Lake & Co.,**
**Imperial House,**
**15-19 Kingsway**
**London WC2B 6UD (GB)**

(56) References cited:
**US-A- 4 524 411**

**Description**

The present invention relates to a power circuit for providing an AC/DC conversion, and more particularly, to a power circuit having an improved AC/DC conversion efficiency.

A power circuit is available in a variety of applications such as AC/DC converting circuits, DC/DC converting circuits, etc., which have been developed taking conversion efficiency, power efficiency, etc., into consideration according to such applications. Switching regulator type power circuits are mainly used for large power consumption devices, while series path type power circuits are used for other devices requiring a precision output voltage. Switching speeds and ripple factors, etc. are taken into account in the case of the switching regulator type power circuits. While losses in circuit elements, transmission efficiencies, etc., are examined in the case of the series path power circuits. Effective powers of AC circuits are determined by phases between voltages and currents and the performance relating the phase is generally expressed as a power factor.

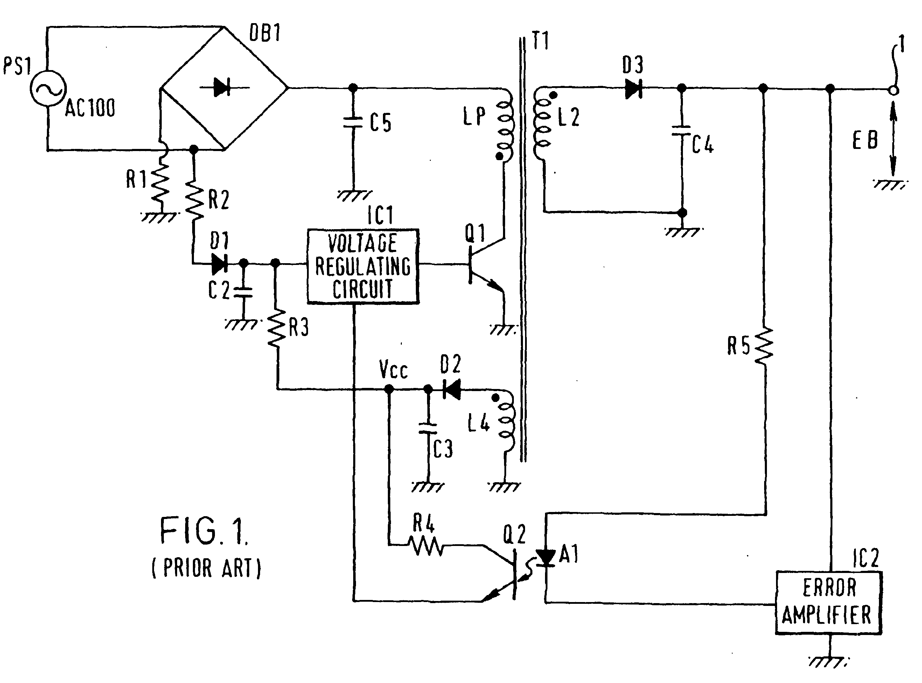

FIGURE 1 shows a conventional power circuit.

In FIGURE 1, an AC power source PS1 is connected to a full-wave rectifier circuit DB1. The full-wave rectifier circuit DB1 supplies its rectified output to a switching regulator, i.e., the load circuit of the full-wave rectifier circuit DB1 after a smoothing at a smoothing capacitor C5. This switching regulator includes a transformer T1 and a switching transistor Q1. A starting circuit comprised of a half-wave rectifier diode D1 and a capacitor C2 is also connected to the switching regulator from the return line in the single phase AC loop of the full-wave rectifier circuit DB1 via a resistor R2.

On the other hand, a DC power output VCC is supplied to a voltage regulating circuit IC1 from a half-wave rectifier circuit D2 coupled to a tertiary winding L4 of the transformer T1 after smoothed at a smoothing capacitor C3. The output of the voltage regulating circuit IC1 is supplied to the base of the transistor Q1.

The collector of the transistor Q1 is connected to one end of the primary winding LP of the transformer T1 and then the other end of the primary winding LP is connected to the smoothing capacitor C5 and the rectifier circuit DB1.

An AC voltage induced across secondary winding L2 of the transformer T1 is rectified through a diode D3 and then the rectified voltage from the diode D3 is output from the output terminal 1 of the power circuit as a stabilized output after smoothed at a capacitor C4 coupled between the cathode of the diode D3 and the reference potential line.

An error amplifier IC2 for detecting fluctuating components of the output voltage is connected to the cathode of the diode D3. The output of the error amplifier IC2 is connected to the cathode of a control diode A1 which comprises a part of a photo-coupler and then the anode of the control diode A1 is connected to the output terminal 1 via a resistor R5. The emitter of a transistor Q2 constituting the other part of the photo-coupler is coupled to the control terminal of a voltage regulating circuit $I_{C1}$, while the collector is connected to DC power VCC output of the half-wave rectifier circuit D2 through a resistor R4.

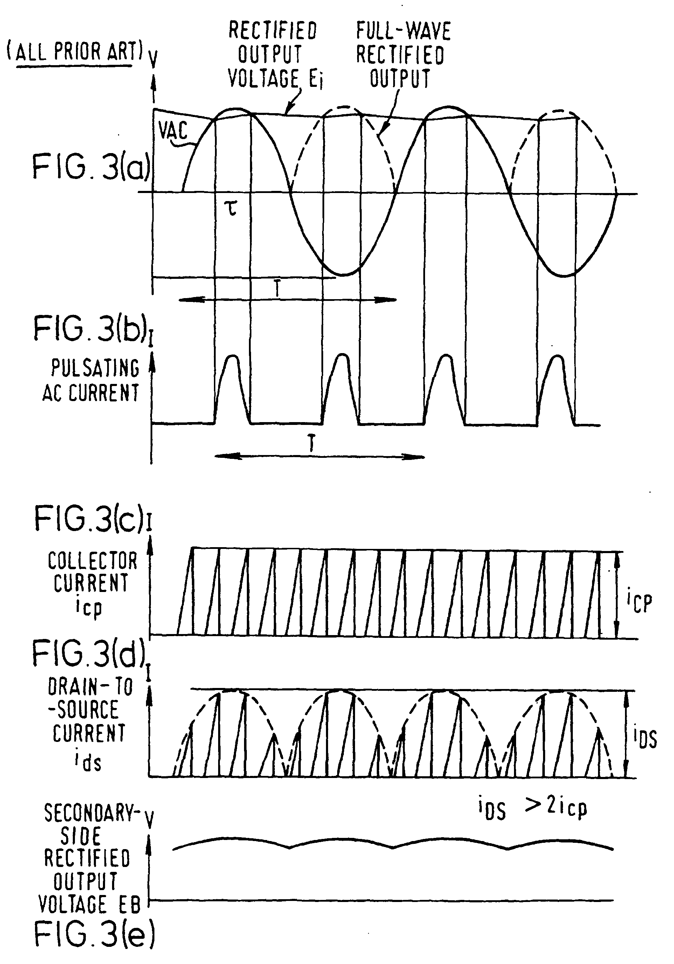

Next, the operation of the conventional power circuit, as shown in FIGURE 1, will be explained using the operating power waveform, as shown in Figures 3(a) through 3(e).

Due to the smoothing capacitor C5 being provided, during the period $\tau$, as shown in FIGURE 3(a) when an input AC voltage VAC is higher than the rectified output voltage $E_i$, in other words, the period when the rectified output voltage $E_i$ is below the AC input voltage VAC by being supplied to the adding circuit, a pulsating AC current, as shown in FIGURE 3(b), flows through the rectifier diode DB1 to turn ON the diode DB1. Further, FIGURE 3(c) shows the collector current of the transistor Q1.

Generally, the smoothing capacitor C5 cannot be made too small in its capacitance when ripples contained in the output voltage EB of the switching regulator are taken into account. Thus in this case, the power ON duration $\tau$ of the rectifier diode is extremely short.

According to the actual measurement, the power ON duration $\tau$ is approximately 2 to 2.5 mS when C1 is 470 $\mu$F and load power is 80 W.

Therefore, in case of the circuit, as shown in FIGURE 1. the power factor is as low as approximately 0.6 (60 %) and a harmonic waves current contained in the pulsating current in the AC power source also large. In order to increase the power factor and reduce the harmonic waves current, it is necessary to extend the ON duration $\tau$ of a diode. In general, when current i(t) is expressed using a Fourier series, the following Equation 1 will be obtained:

[Equation 1]

$$i(t) = a_0 + \sum_{n=1}^{n} (a_n \sin n\omega t + b_n \cos t\omega)$$

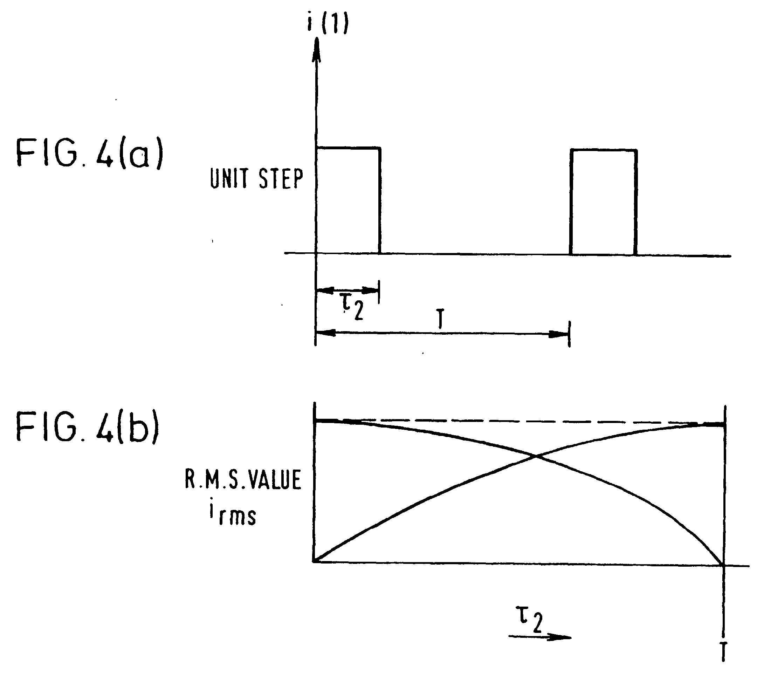

Here, if i(t) is a unit step function, as shown in FIGURE 4, a DC component $a_0$ and AC components $a_n$, $b_n$ will be expressed by following Equation 2.

[Equation 2]

$$a_0 = \frac{1}{T}\int_0^T i(t)\,dt = \frac{2}{T}\int_0^{\tau_2} i(t)\,dt = \frac{2\tau_2}{T}$$

$$a_1 = \frac{4}{T}\int_0^{\tau_2} \sin n\omega t\,dt = \frac{4}{T}\cdot\frac{1}{n\omega}(1-\cos n\omega\tau_2)$$

$$b_1 = \frac{4}{T}\int_0^{\tau_2} \cos n\omega t\,dt = \frac{4}{T}\cdot\frac{1}{n\omega}\sin n\omega\tau_2$$

If the r.m.s. value of the fundamental wave current where n = 1 being given by $i_1$, the r.m.s. value of the harmonic waves current being given by $i_n$, and the r.m.s. value of i(t) being given by $i_{rms}$, the relationship among the $i_1$, the $i_n$ and the $i_{rms}$ is given by the following Equation 3.

[Equation 3]

$$i_1 = \frac{\sqrt{a_1^2 + b_1^2}}{\sqrt{2}} = \frac{1}{\sqrt{2}}\frac{4}{\omega T}\sqrt{2(1-\cos\omega\tau_2)^2} = \frac{2}{\pi}(1-\cos\omega\tau_2)$$

$$i_n = \sqrt{i_{rms}^2 + i_1^2}$$

If the power ON duration $\tau_2$ of the diode in the above Equation 3 is extended, the fundamental wave current $i_1$ increases and a power factor also increases. On the other hand, the harmonic wave current $i_n$ decreases.

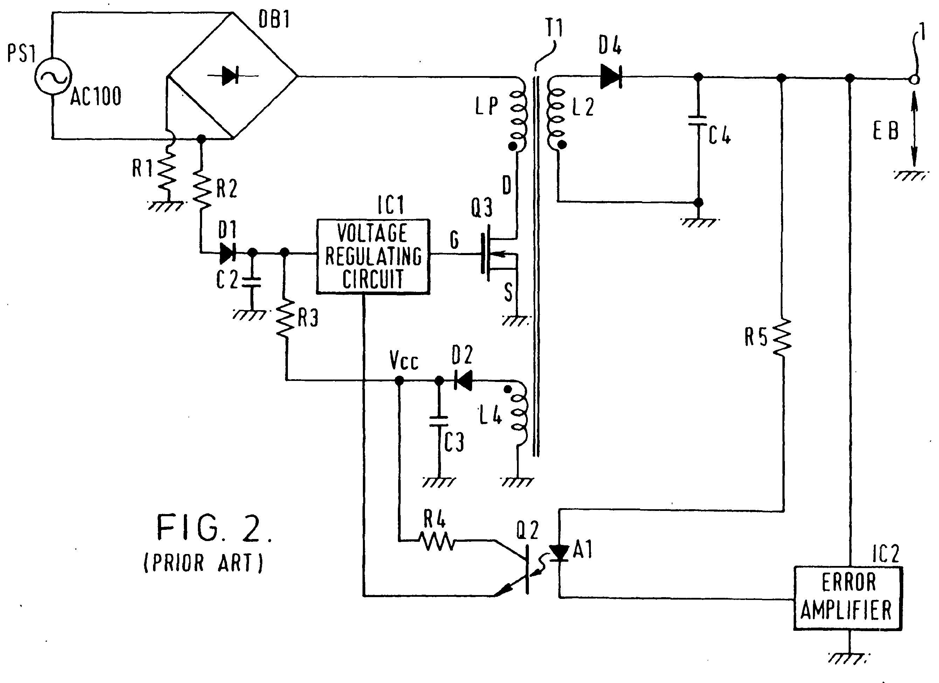

The power circuit, as shown in FIGURE 2, has been devised for improving this power factor. The power circuit of FIGURE 2 is an example where a MOSFET switching transistor Q3 was used and other parts are identical to the circuit of FIGURE 1 except that the smoothing capacitor C5 was not used after rectification. The power circuit of FIGURE 2 is also an example where the power efficiency was improved by the operation of a voltage driving type device by making the most of operating characteristics such as the switching speed, etc., utilizing a rectified pulsating voltage.

There is no smoothing capacitor C5 provided after the AC power was rectified and a switching regulator is operated directly by AC voltage.

In this case, since the switching transistor Q3 operates over the whole period T, correspondingly the ON duration of the rectifier diode extends up to T/2 and a value of power factor above 0.9 is obtained.

However, contrary to the power factor improvement, such drawbacks explained below will be caused.

First, the drain-to-source current $i_{DS}$ flowing through a switching transistor, for instance, MOSFET switching transistor Q3 in the operating state is shown in FIGURE 3(d). Its envelope has a sine-wave shape, and thus the drain-to-source current $i_{DS}$ becomes small in a time zone where AC voltage is low, while it becomes large when the AC voltage reaches around a peak value.

The collector current $i_{CP}$ of the transistor Q1 in FIGURE 1 is smoothed, as shown in FIGURE 3(c), by the smoothing capacitor. Therefore, when this collector current is compared with the drain-to-source current $i_{DS}$ of the transistor Q3 at a same load (the same mean current) condition, the drain-to-source current $i_{DS}$ of the transistor Q3 becomes two or more times of the collector current $i_{CP}$. Because of this, the rating of the transistor Q3 (MOSFET) becomes large and it becomes necessary to make it large in size in connection with saturation of the switching transformer core, and thus a cost will increase.

The circuit shown in FIGURE 2 is an example where a current driving type bipolar transistor was changed to a voltage driving type bipolar transistor, and characteristics of a power source using the MOSFET type switching transistor Q3 are improved in view of characteristics such as the switching speed, the input impedance, etc. However, as far as a cost is concerned, there was a drawback of cost increase as over-ratings and over-specifications of electric performance are demanded and it was forced to use large size parts in consideration of the maximum operating range when compared with the bipolar transistor.

Secondly, since the secondary side rectified output voltage of the switching regulator has a sine-wave enveloped ripple voltage, as shown in FIGURE 3(e), it becomes necessary to provide such a circuit as a switching regulator using a series path type regulator or a choke coil at the secondary side.

Thirdly, the operation holding time during the momentary stoppage of AC power line is too short because of that no smoothing capacitor is provided. Therefore, there was such a problem that the output voltage EB drops largely due to fluctuation in the input line or momentary fluctuation of external noise and distortions will appear on the screen when it was applied to a TV set, and the product performance was deteriorated.

Fourthly, since the current flowing through the switching transistor has the sine-wave envelope, as described in reference to the first drawback, if a current driving type bipolar transistor is used as a switching element, the base current (the driving current) also must be modulated to the sine-wave envelope.

However, there was a problem in that it was actually difficult to use a current driving type transistor because of a difference between ON and OFF durations or restriction of switching speed of a current driving type PN junction transistor and it had to use a voltage driving type MOSFET.

As described above, a conventional circuit has such drawbacks that a power factor is low and power efficiency is worse and if a voltage driving type FET is used as a switching element, its power efficiency can be improved by characteristics such as the switching speed, the input impedance, etc. But on the other hand, there was such a problem that in view of the cost, it will become expensive and furthermore, the number of additional circuits as well as component parts will increase and the circuit will become large in size.

US 4,524, 411 discloses a regulated switched-mode power supply for a television set, having a transformer whose primary winding is coupled to an unregulated voltage source and whose secondary winding is coupled to a load circuit, which also has a supplemental transformer winding coupled to earth by means of a diode, which is magnetically coupled to the primary winding, and acts to transfer additional energy to the load circuits.

In US 4,524,411, the rectified current to the horizontal deflection circuit is directly supplied without receiving any regulation by the switching regulator. Thereby, the conduction time of the bridge type rectifier diodes are not changed from the conventional circuit. Accordingly, the circuit of US 4,524,411 fails to suppress higher harmonics of the conventional circuit.

In detail, US-A-4,524,411 discloses a power circuit for a television set comprising

- input means 10 for receiving an AC power supply voltage from an AC power line;
- a rectifier circuit 11 coupled to the input means for rectifying the AC power supply voltage and operable to output a rectified voltage via an output terminal;
- a flyback transformer 14 (winding 35) including at least a winding having first and second ends;
- a voltage stabilizing circuit 12 operable to produce a stabilized voltage from the rectified voltage output from the output terminal of the rectifier circuit;
- means for supplying the stabilized voltage from the voltage stabilizing circuit to the first end 13 of the winding 16 of the flyback transformer;
- an output transistor 20 coupled to the second end of the (primary) winding 16 of the flyback transformer (and when made conductive causing current to flow through the winding of the flyback transformer);
- a driving transformer 43 having an input winding provided for receiving horizontal period driving pulses, and first and second output windings provided for controlling switching of the output transistor 20, whereby pulses are generated for raising the basis-emitter-voltage of output transistor 20.

The present invention seeks to provide a power circuit that is cheap in cost and capable of obtaining a high power factor.

According to the present invention, there is provided a power circuit for a television set, the circuit comprising:

input means for receiving an AC power supply voltage from an AC power line;
a rectifier circuit coupled to the input means for rectifying the AC power supply voltage and operable to output a rectified voltage via an output terminal;

a flyback transformer including at least a winding having first and second ends;

a voltage stabilising circuit operable to produce a stabilised voltage from the rectified voltage output from the output terminal of the rectifier circuit;

means for supplying the stabilised voltage from the voltage stabilising circuit to the first end of the primary winding of the flyback transformer;

a horizontal output transistor coupled to the second end of the winding of the flyback transformer;

a driving transformer having an input winding provided for receiving horizontal periodic driving pulses, and first and second output windings, whereby the first output winding is provided for controlling switching of the output transistor;

a pulse transformer having primary and secondary windings, whereby the primary winding is inductively coupled to the second output winding of the driving transformer, the first end of the secondary winding is coupled to the output terminal of the rectifier circuit and the second end of the secondary winding is connected via a smoothing capacitor to a reference potential;

a voltage generator including smoothing capacitor which is operable to generate an AC signal responsive to the drive pulse across the winding of the pulse transformer;

such that electric power is supplied to the stabilised power circuit from the smoothing capacitor via the secondary winding of the pulse transformer or from the output of the rectifier diode.

For a better understanding of the present invention and to show how it may be put into effect, reference will now be made by way of example to the accompanying drawings, wherein:

FIGURE 1 is a circuit diagram showing a conventional power circuit using a bipolar device;

FIGURE 2 is a circuit diagram showing a conventional power circuit using MOSFET:

FIGURES 3(a) through 3(e) are diagrams for explaining the relation among AC voltage and AC current of a conventional power circuit and switching transistors (bipolar transistor and MOSFET):

FIGURES 4(a) and 4(b) are diagrams for explaining the relation among a unit step current waveform, the fundamental wave current $i_1$ and harmonic current $i_n$ for calculating the AC current shown in FIGURES 3(a) through 3(e) equivalently by Fourier series;

FIGURE 5 is a circuit diagram showing a power circuit;

FIGURES 6(a) through 6(d) are diagrams for explaining the ON/OFF operations of the switching transistor shown in FIGURE 5;

FIGURE 7(a) shows an equivalent circuit diagram when the switching transistor shown in FIGURE 6(a) through 6(d) is in the OFF state and FIGURE 7(b) shows AC voltage waveform V3 which is induced across a tertiary winding;

FIGURES 8(a), 8(b) and 8(c) show waveforms of parts of the circuit shown in FIGURE 5:

FIGURE 9 is a circuit diagram showing a modification of the power circuit of FIGURE 5;

FIGURE 10 is an embodiment with the power circuit of the present invention applied to a horizontal deflection circuit of a TV receiver;

FIGURE 11 is a circuit diagram showing another power circuit;

FIGURES 12(a) and 12(b) are diagrams for explaining the ON/OFF operations of the switching transistor shown in FIGURE 11;

FIGURES 13(a) through 13(d) show operating waveforms of primary and secondary side currents and collector voltage of a switching transistor;

FIGURES 14(a) and 14(b) are diagrams for explaining the charging current flowing into the capacitor C1;

FIGURE 15 is a modification of a power circuit shown in FIGURE 11;

FIGURE 16 is an explanatory diagram for explaining the operation of the circuit shown in FIGURE 15;

FIGURE 17 is another modification of the power circuit shown in FIGURE 11; and

FIGURES 18(a), 18(b) and 18(c) are diagrams showing the operating waveforms of AC currents shown in FIGURES 11, 15 and 17.

Throughout the drawings, reference numerals or letters in FIGURES 1 through 4 will be used to designate like or equivalent elements for simplicity of explanation.

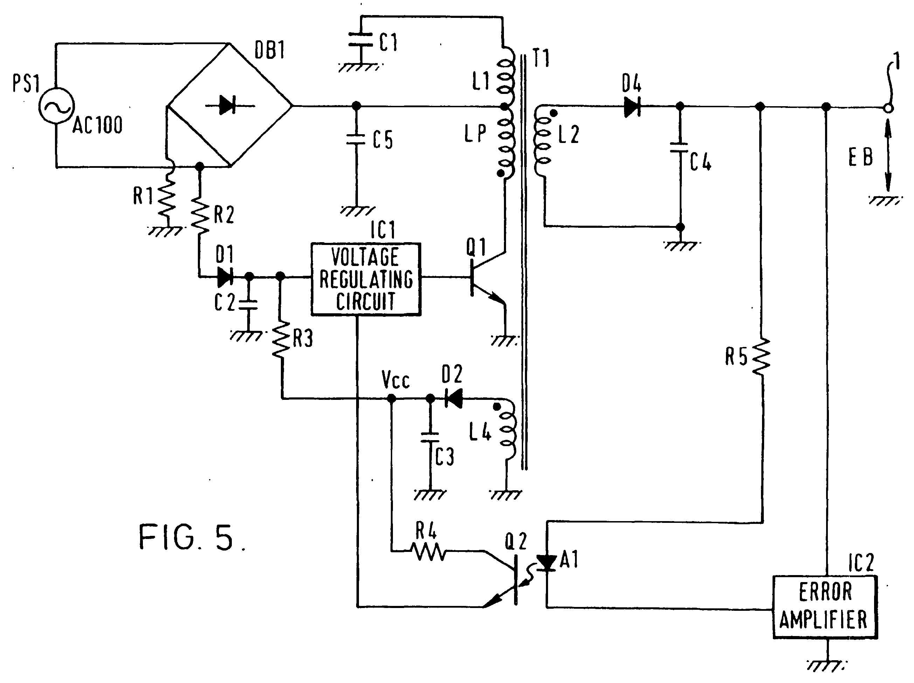

FIGURE 5 is a circuit diagram showing a power circuit.

In FIGURE 5, reference numerals and letters used in FIGURE 1 will be used to designate the same or like elements for simplicity of explanation.

In FIGURE 5, an AC power source PS1 is connected to a full-wave rectifier circuit DB1. The output of this full-wave rectifier circuit DB1 is connected to a capacitor C5 in small capacity for removing noise and to one end of a primary winding LP of a transformer T1. The other end of the primary winding LP of the transformer T1 is connected to the collector of a transistor Q1 which is used as a switching element. A half-wave rectifier circuit comprising a diode D1 and a capacitor C2 is connected to a single-phase AC return line of the AC power source PS1 and to a voltage regulating circuit IC1 in the next stage. The output of this voltage regulating circuit IC1 is connected to the base of the transistor Q1 to regulate the current path of the primary winding of the transformer T1 and regulate the secondary side output voltage EB.

A tertiary winding L1 is connected to one end of the primary winding LP and to a reference potential at a capacitor C1.

A secondary winding L2 is connected to a half-wave rectifier circuit which is comprised of a diode D4 and a smoothing capacitor C4 and outputs stabilized voltage EB to a terminal 1. Fluctuation of the output voltage EB of the terminal 1 is detected by an error amplifier IC2 and its detection output is supplied to the voltage regulating circuit IC1 as a feedback signal.

The feedback signal is fed back using a photo-coupler in consideration of a noise characteristic. The photo-coupler contains a control diode A1 and a transistor Q2. The drive voltage for the voltage regulating circuit and the photo-to-coupler is supplied by rectifying the output voltage induced across the fourth winding L4 of the transformer T1 by a half-wave rectifier diode D2 and then smoothed by a smoothing capacitor C3.

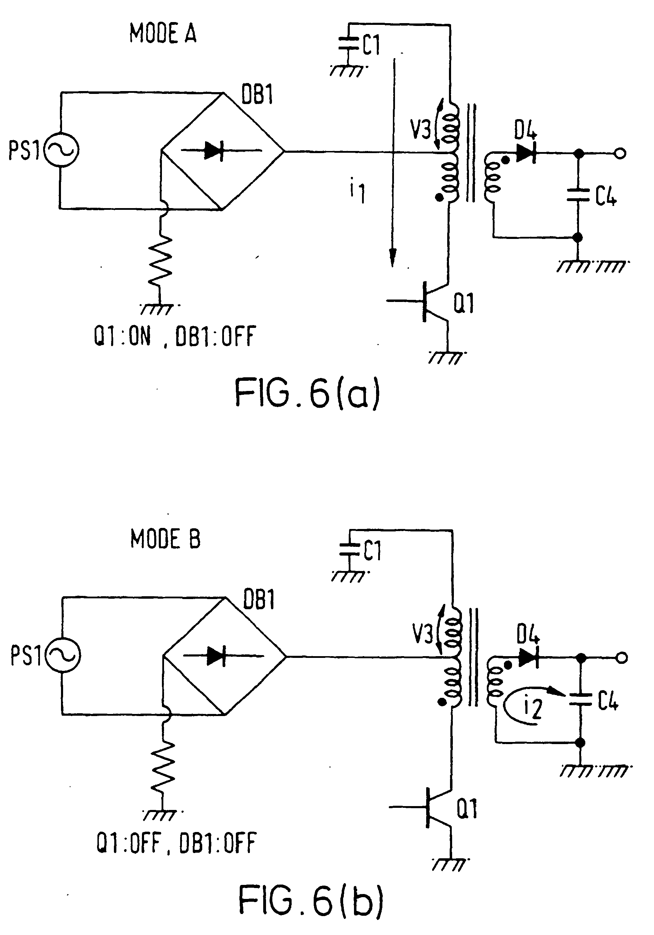

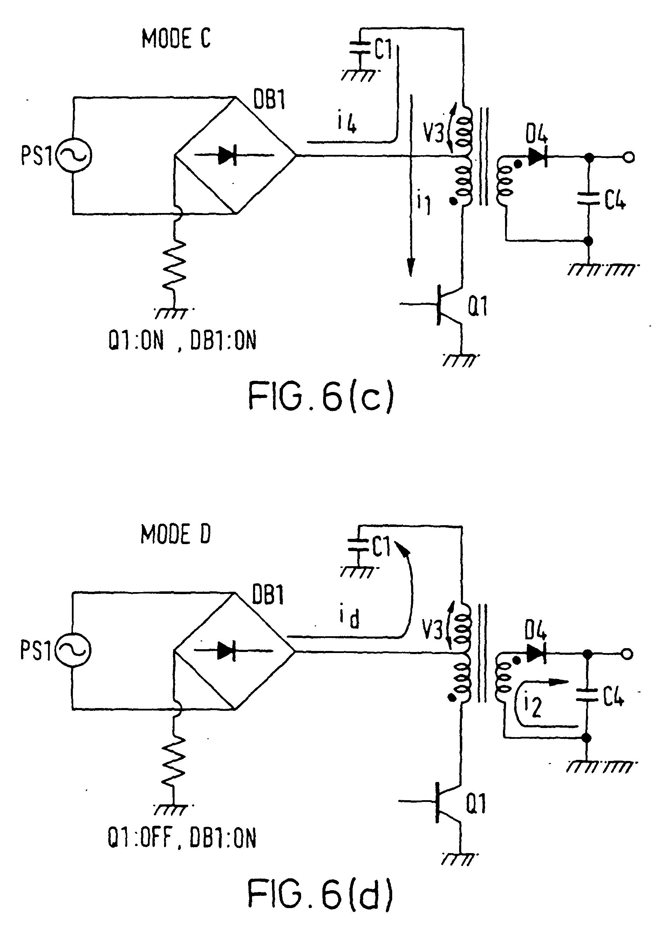

The operation of the power circuit, as shown in FIGURE 5, will be described in reference to FIGURES 6, 7 and 8.

The AC power source PS1 is applied directly to the connecting node of the tertiary winding L1 with the primary winding LP of the transformer T1 via the rectifier diode DB1. On the other hand, the switching of the switching transistor Q1 is controlled by the output of the voltage regulating circuit IC1 and the control voltage obtained by detecting the secondary side rectified output voltage EB by the error amplifier IC2 is fed back via a photo-coupler Q2 so that the output voltage EB is controlled to a constant level. Further, to the voltage regulating circuit IC1, rectified voltage from a starting circuits D1 and C1 is supplied when AC is input and after the circuit reached a steady state, voltage VCC obtained by rectifying voltage induced on the winding L4 of the switching transformer is supplied as the power source. The circuit of FIGURE 5 comprises a flyback type switching regulator (stabilized power circuit) as a whole. Thus the secondary side rectified output voltage EB is obtained during the flyback period of the switching transistor being OFF.

The operating state of the transistor Q1 and the diode bridge DB1 will be explained in reference to the following four modes, as shown in FIGURES 6(a), 6(b), 6(c) and 6(d).

FIGURE 6(a) --- Q1 is ON, DB1 is OFF;

FIGURE 6(b) --- Q1 is OFF, DB1 is OFF;

FIGURE 6(c) --- Q1 is ON, DB1 is ON; and

FIGURE 6(d) --- Q1 is OFF, DB1 is ON.

Each of the above states corresponds to the operating state in the four modes. Hereinafter, the modes as shown in FIGURES 6(A), 6(b), 6(c) and 6(d) will be presented as mode A, mode B, mode C and mode D.

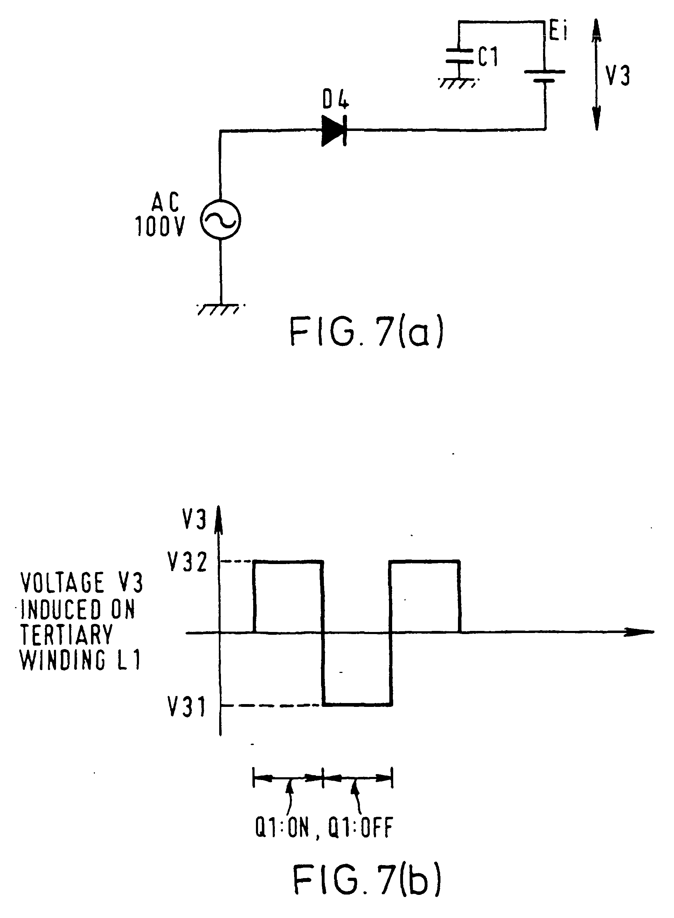

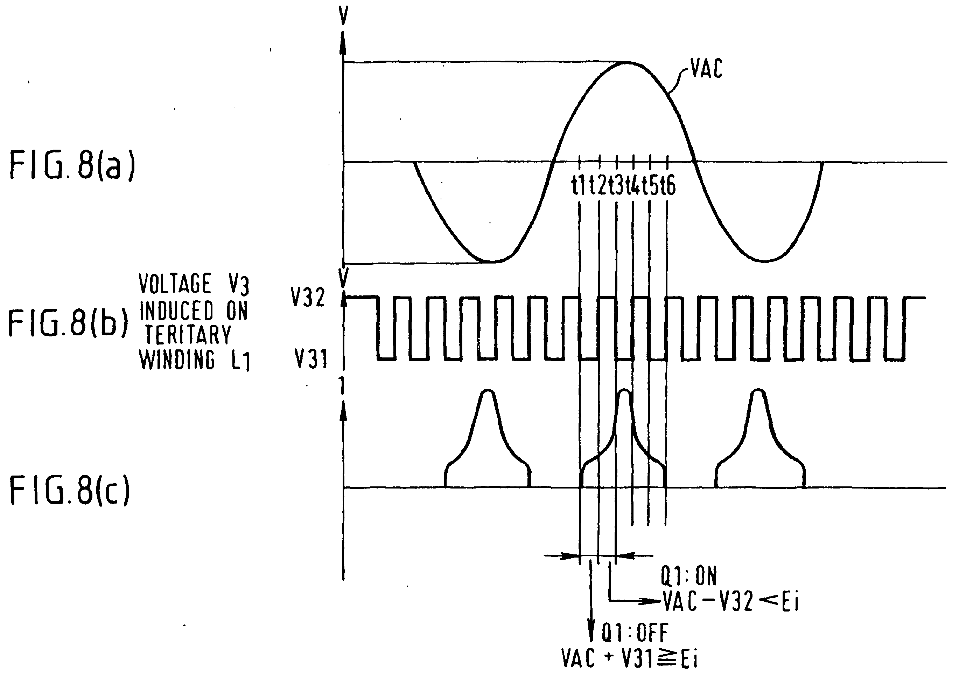

Modes A and B among the four modes are the operations when the rectifier diode DB1 is in the OFF state and when the switching transistor Q1 is in the ON state, the primary current $i_1$ is supplied from the smoothing capacitor C1 to the primary winding LP and the tertiary winding L1 as in mode A. Further, when the switching transistor Q1 is turned OFF, the electromagnetic energy accumulated in the switching transformer T1 during the ON duration is released as the secondary current $i_2$ and the output voltage EB is obtained. Equivalent circuits of the AC voltage source, the rectifying diode DB1 and the tertiary winding L1 are shown in FIGURE 7(a), while the AC voltage waveforms having peak-to-peak voltages V31 and V32 induced the tertiary winding L1 is shown in FIGURE 7(b), FIGURES 8(a). 8(b) and 8(c) show the AC voltage waveform, the current waveform and the voltage V3 induced on the tertiary winding.

IF DC voltage generating across the smoothing capacitor C1 being given by $E_i$, the voltage induced on the tertiary winding L1 of the switching transformer being given by V3. the negative voltage generated when the switching transistor Q1 is OFF, as shown in FIGURE 7(a) and 7(b), being given by V31, and the voltage generated when the switching transistor Q1 is ON, being given by V32, the AC voltage VAC having a sine-wave envelope increases with the time. Thus at the time t1 in FIGURES 8(a), 8(b) and 8(c) when VAC + V31 $\geqq E_i$, the rectifier diode DB1 is first turned ON state during the switching transistor Q1 being in OFF. And then the rectification current $i_d$ flows to charge the smoothing capacitor C1, as shown in mode D.

Next, if the switching element Q1 is turned ON, the primary current $i_1$ is discharged from the smoothing capacitor C1 to the tertiary winding L1 and the primary winding LP. and positive voltage V32 is induced on the tertiary winding L1 in contrast with the above. This voltage is in the reverse bias state against the conducting direction of the rectifier diode DB1.

At this time, VAC - V32 is smaller than $E_i$ (i.e.. VAC - V32 < $E_i$), and the rectifier diode DB1 is not turned ON and the operation is the same as the state of mode A.

Therefore, if VAC - V32 is smaller than $E_i$ throughout the whole period, there is no state of mode C. The rectifier diode BD1 is again turned ON and the smoothing capacitor C1 is charged. Since these operations are repeated for the periods of t1 through t6, the ON duration of the diode DB1 will become equal to the period of t1 through t6.

Here, the ON duration $\tau$ of the rectifier diode DB1 of a conventional power circuit, as shown in FIGURE 3, will be compared with the ON duration of the power circuit of FIGURE 5.

In the steady state, voltage applying in the forward direction of the rectifier diode DB1 is for the duration when the voltage relation of VAC - $E_i$ holds good in case of a conventional power circuit while in the duration when the switching transistor Q1 is in the OFF state, the voltage relation of VAC + V31 - $E_i$ holds good in the power circuit of FIGURE 5.

Therefore, the forward bias voltage of the rectifier diode DB1 at the same AC voltage will becomes larger in the power circuit of FIGURE 5 and on the other hand, a time t1 when the rectifier diode DB is turned ON will become faster in the circuit of the present invention.

Furthermore, when the switching transistor Q1 is kept ON. the rectifier diode DB1 is kept OFF and therefore, if the duty ratio of the ON/OFF operation of the switching transistor Q1 is 1 : 1. the width will correspondingly expands by two or more times.

As a result, the ON duration of the rectifier diode DB1 becomes more wider, the power factor increases and the harmonic waves current $i_n$ decreases in the power circuit of FIGURE 5 more than a conventional power circuit.

Further, at this time, if the voltage V31 generated in the OFF duration of the switching transistor Q1 increases when increasing the number of turns of the tertiary winding L1, a time for turning the rectifier diode DB1 ON is advanced and the power factor can be more increased. Similarly, even when the duty ratio of the switching transistor Q1 is changed, the equivalent ON duration $\tau$ of the rectifier diode can be extended if the ON duration of the switching transistor Q1 is made longer than the OFF duration.

As the smoothing capacitor C1 is provided as an essential component, the power circuit has such merits that the collector current of the switching transistor Q1 is a mean level, a cheap current driving type switching transistor Q1 can be used, and a sharp rating increase of the switching transformers and the switching transistors will become unnecessary.

Further, the power circuit has a higher effect by having a time constant due to a capacitor in compared to a voltage driving type circuit, against a momentary power failure and a momentary voltage fluctuation of the AC power line. Thus a stabilized power can be obtained without causing change of output fluctuation momentarily following a fluctuating component.

Furthermore, as the ON duration $\tau$ of the rectifier diode DB1 is longer than that of the circuit, as shown in FIGURE 1. the ripple voltage of the smoothing capacitor C1 decreases and its capacity can be made small.

When the tertiary winding L1, as shown in FIGURE 5, is wound, the negative voltage V31 induced on the tertiary winding L1 during the OFF duration of the switching transistor Q1 is proportional to the rectified output EB of the voltage induced across the secondary winding, and on the other hand as it is controlled by the error signal from the error amplifier IC2 to make the rectified output voltage EB constant, the negative voltage is also kept constant.

In the state where load current is increased (increases of harmonic components) as a result of drop of input AC voltage, that is, in the overloaded state, as a negative voltage increases in corresponding to the increase of the load current and fluctuating components in inputs are controlled to constant levels, it becomes possible to suppress the fluctuation of the power factor and the occurrence of harmonic components.

The ON duration r of the rectifier diode DB1 is extended equivalently by using the negative voltage V31 of the tertiary winding L1 and it is therefore possible to provide a power source with a high power factor in a simple circuit structure.

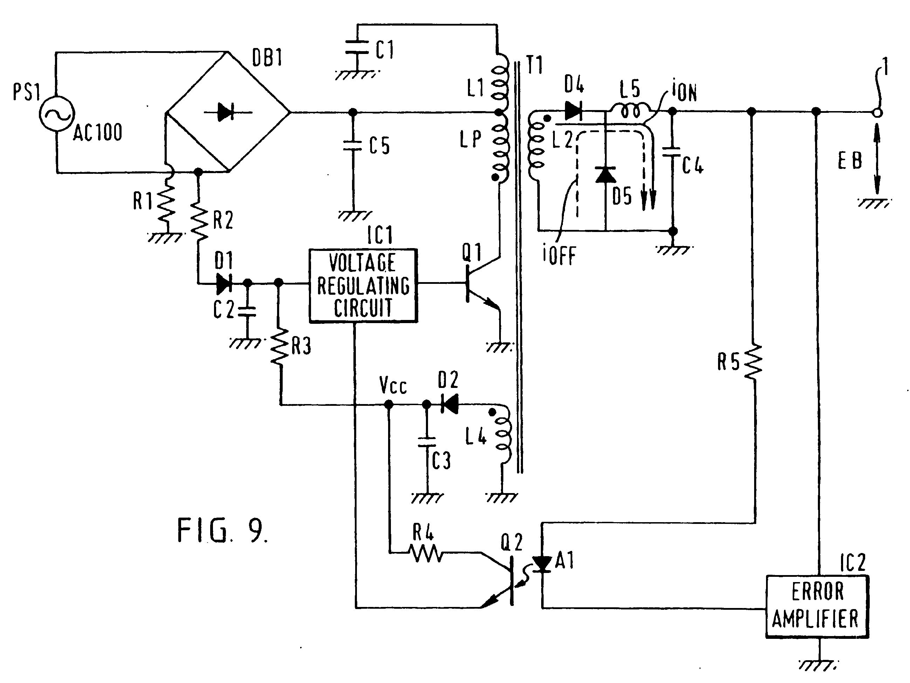

Shown in FIGURE 9 is a forward type switching regulator equipped with a power circuit according to the present invention, wherein a choke coil L5 and a diode D5 are incorporated in connected with the secondary side of the transformer T1. In this FIGURE 9, the secondary side rectified voltage EB is obtained by applying the current $i_{ON}$ in the direction of the solid line through the choke coil L5 during the ON duration of the switching transistor Q1 and the current $i_{OFF}$ in the direction of the broken line during the OFF duration.

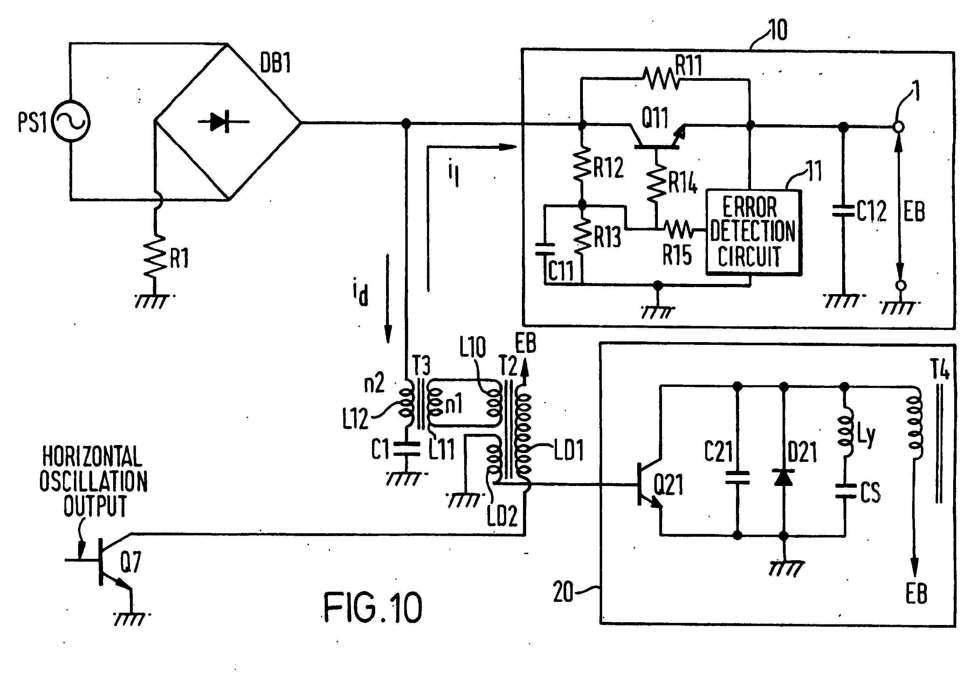

Shown in FIGURE 10 is a circuit in accordance with the invention including a horizontal deflection circuit of a TV receiver.

First, the construction of the circuit, as shown in FIGURE 10, will be explained.

The single-phase AC line of the AC power source PS1 is connected to the full-wave rectifier circuit DB1. The output of the rectifier circuit DB1 is connected to a series path regulator 10 including a base earthing type transistor Q11.

Further, the output of the rectifier circuit DB1 is connected to a reference potential source by the capacitor C1 via the secondary winding L12 of the transformer T3.

The series path regulator 10 is comprised of an error detection circuit 11, a feedback resistor R11, bias resistors R12, R13, R14 and R15, and a bias capacitor C11. A smoothing capacitor C12 is connected in parallel with the series path regulator 10 for the output.

Further, the transformer T2 is a horizontal driving transformer. Horizontal driving pulse from a horizontal oscillation circuit (not shown) is supplied to the base of a transistor Q7 and the input winding LD1 of the transformer T2 is driven by the collector output of the transistor Q7.

In a horizontal deflection circuit 20, horizontal driving pulse is supplied to an output transistor Q21 via an output winding LD2 of the driving transformer T2, and a damper diode D21, a resonance capacitor C21 and a deflection coil Ly connected in series with an S-shaped correction capacitor CS are connected in parallel with each other.

The voltage from the output terminal 1 of the series path regulator is supplied to the transformers T2 and T4 as their power supply voltages.

Further, a secondary winding L10 where the output winding L10 of the transformer T2 is coupled with the primary winding L11 of a pulse transformer T3 is induction coupled to the output winding L10 of the driving transformer T2.

Now the operation of the circuit, as shown in FIGURE 10, will be explained hereinafter.

The pulse transformer T3 is inserted between the rectifier diode DB1 and the smoothing capacitor C1, and electric power is supplied to the stabilized power circuit 10 from the connecting node of a secondary winding L12 of the pulse transformer T3 and the output of the rectifier diode DB1.

The output winding L10 of the driving transformer T2 is connected to the primary winding L11 of the pulse transformer T3 and the rectangular wave pulse voltage induced on this winding L10 is present on the secondary winding L12 of the pulse transformer T3.

This rectangular wave pulse voltage is in the same waveform as that shown in FIGURES 7(a) and 7(b).

By this voltage, the diode DB1 in the rectifier circuit is forward or reverse biased, thus the rectified current $i_d$ flows as shown in FIGURE 10. As explained above, the load current $i_1$ is supplied to the series path regulator during the period when positive voltage V32 is generated. By repeating this operation, it is resultingly possible to extend the ON duration of the rectifier diode DB1 and improve a power factor.

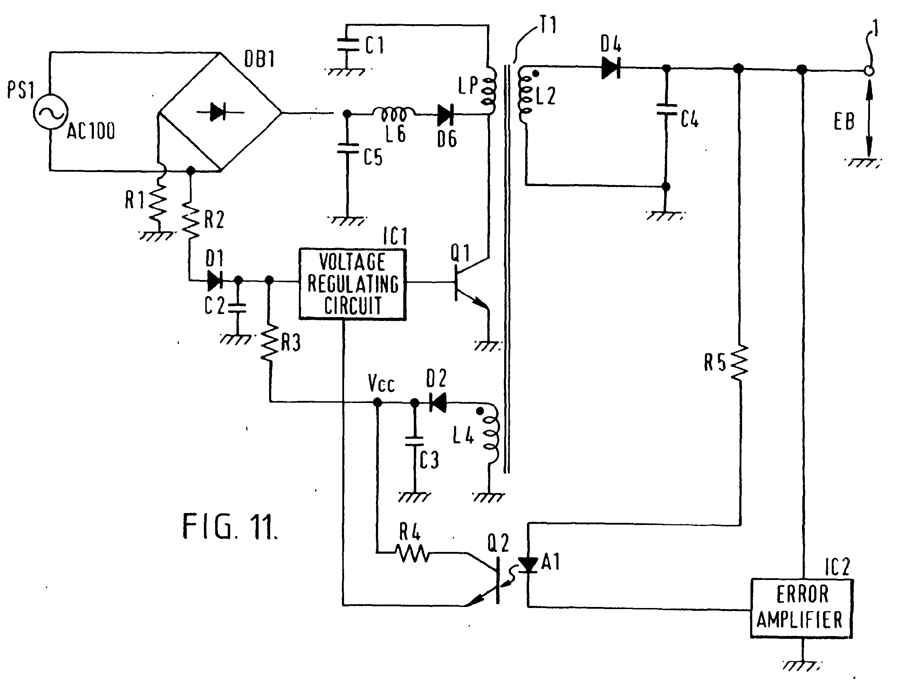

Shown in FIGURE 11 is another power circuit.

In FIGURE 11, the same elements as those in FIGURE 1 will be explained by assigning the same reference numerals and letters used in FIGURE 1.

The AC power source PS1 is connected to a noise removing capacitor C5 in small capacity via the full-wave rectifier circuit DB1. The choke coil L6 is connected to the output of the rectifier circuit DB1 and this choke coil L6 is connected to the anode of the rectifier diode D6. The cathode of this rectifier diode D6 is connected to the primary winding LP of the transformer T1 and the collector of transistor Q1. The emitter of the transistor Q1 is connected to the reference potential and a control signal is supplied to the base of the transistor Q1 from the voltage regulator IC1.

The other end of the primary winding LP of the transformer T1 is connected to the reference potential at the capacitor C1. The secondary winding L2 of the transformer T1 outputs voltage to the output terminal 1 via the rectifier/smoothing circuits D4/C4. The output of the rectifier/smoothing circuit D4/C4 is connected to the error amplifier IC2 and an error signal is supplied to a photo-coupler connected between this error amplifier IC2 and the output. This photo-coupler contains a diode A1 and a transistor Q2, the output of the transistor Q2 is connected to the voltage regulating circuit IC1 and a control signal for regulating an output voltage value EB is supplied to the base of the transistor Q1 by this control signal.

Further, a starting signal is supplied from the single phase AC return line to the voltage regulating circuit IC1 via the rectifier circuit D1. The power supply voltage VCC for the transistor Q2 of the photo-coupler and the voltage regulating circuit IC1 is supplied from the rectified signal of a tertiary winding L4 of the transformer via the rectifier diode and the smoothing capacitor C3. The power supply voltage VCC and the staring signal are supplied to the voltage regulating circuit IC1 through a common line.

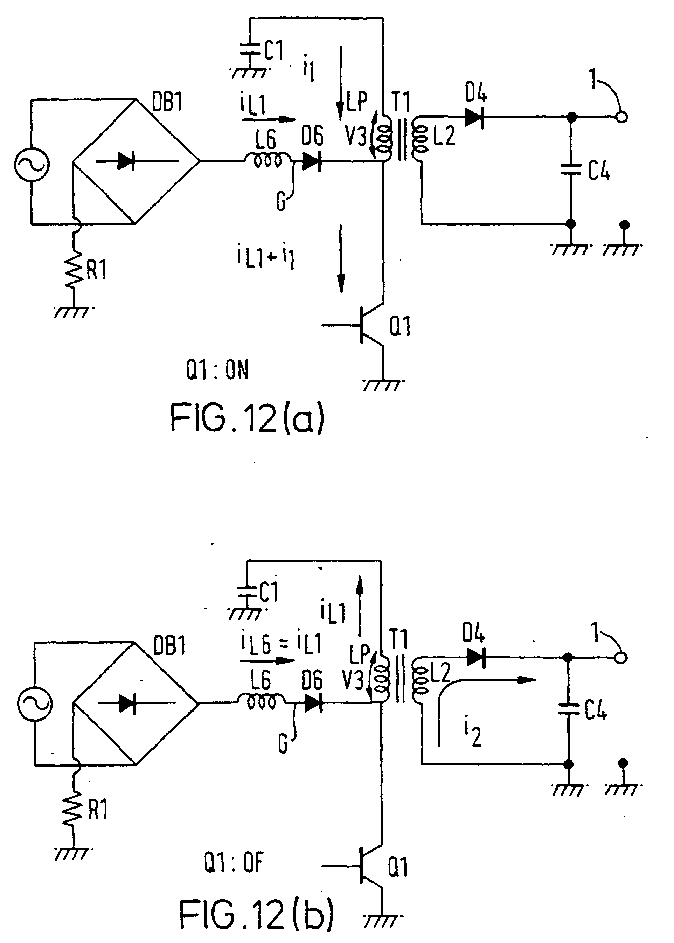

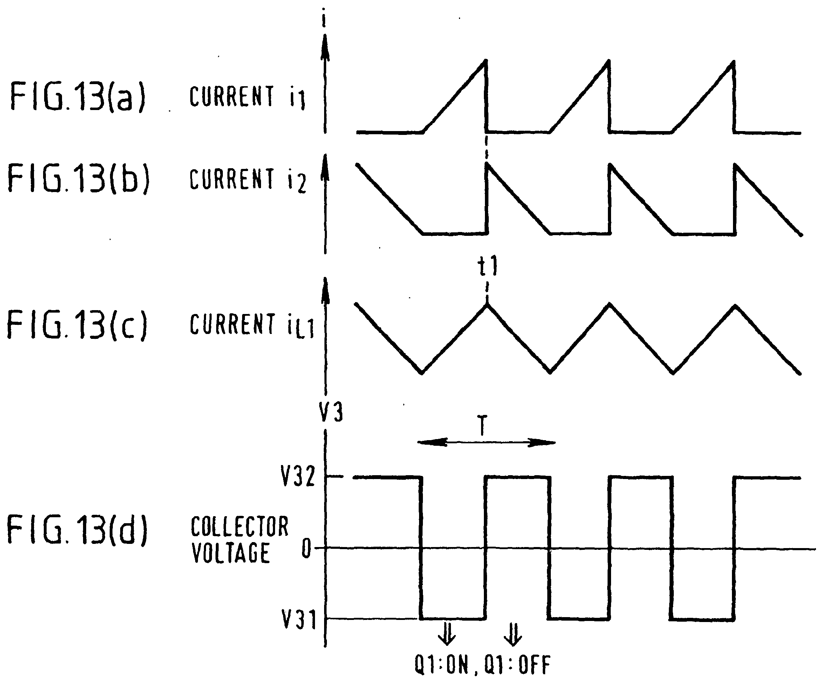

The operation of the circuit shown in FIGURE 11 will be explained in reference to FIGURES 12(a), 12(b), 13(a), 13(b) and 13(c).

FIGURE 12(a) shows the switching transistor Q1 in the ON state, while FIGURE 12(b) shows the switching transistor Q1 in the OFF state.

When the switching transistor Q1 is in the OFF state, the primary current $i_{L1}$ charges the capacitor C1 via the choke coil L6. The pulsating AC voltage waveform is smoothed by the smoothing capacitor C1 and the rectifier diode DB1 is turned ON by the output voltage $i_1$ of the smoothing capacitor C1 and the AC voltage waveform VAC.

When the current flows in according to the forward characteristic of the diodes DB1 and D6, the change in voltage pursuant to the time change of the current is caused by the choke coil 6. This relation with the time is a linear relation and is caused by the charge/discharge of electromagnetically induced energy responsive to the ON/OFF operations of the switching transistor Q1.

The current flowing to the capacitor C1 during the OFF state generates a voltage as a result of the charging the capacitor C1. This voltage becomes rectangular wave pulses and added to the collector of the transistor Q1.

Now, the current flowing through the primary winding LP of the transistor T1 via the choke coil 6 is assumed to be $i_{L1}$ and the current flows as a result of the discharge of the capacitor C1 is assume to be $i_1$.

The secondary side current $i_2$ is induced by the polarity of the diode and the current of the primary winding in the half-wave rectifier circuit D4.

The operations of the circuit will be explained further in detail with reference to the operating waveforms.

When the switching transistor Q1 is turned ON, the current $i_{L1}$ flows from the AC power source PS1 via the choke coil L6 and further, the current $i_1$ flows to the primary winding LP of the switching transformer by the voltage $E_i$ previously stored across the smoothing capacitor C1. The waveforms of the operating currents at this time are shown in FIGURES 13(a), 13(b) and 13(c). The currents $i_{L1}$ and $i_1$ vary in almost linear in relation to the time. Thus during the duration when Q1 is ON, electromagnetic energy expressed below in Equation 4 is stored in respective inductances L6 and LP.

[Equation 4]

$$\frac{1}{2} L6 \cdot i_{L1}^2 \quad , \quad \frac{1}{2} LP \cdot i_1^2$$

If the AC power source VAC is given as Em SIN $(\omega t + \phi)$, the voltage across the smoothing capacitor is $E_i$ and an initial value is 0, the currents $i_{L1}$ and $i_1$ during the duration when Q1 is ON are given by the following Equations 5, respectively.

[Equations 5]

$$i_{L1} = \frac{E_i}{\omega L6}\{1 - \cos(\omega t + \phi)\}$$

$$i_{L1} = \frac{E_i}{LP} t$$

When the time t1 in FIGURES 13(a), 13(b) and 13(c) reaches, the switching transistor Q1 is turned OFF. Thus the electromagnetic energy stored previously in the primary winding LP of the switching transformer T1 is released as the secondary winding current $i_2$, rectified and smoothed, as shown in FIGURES 12(a) and 12(b), so as that the output voltage EB is obtained.

Further, the energy stored in the first choke coil L6 is released as the current $i_{L1}$ from the first choke coil L6 through the diode D2 and the primary winding LP to the smoothing capacitor C1 and charges the capacitor C1.

If the time t1 shown in FIGURES 13(a), 13(b) and 13(c) being given as a reference time 0 (coordinate origin) and the currents flowing through the circuit at the time t1 (the initial condition) being given as $i_{L1}(0)$ and il(0), the current $i_{L1}$ (TOFF) flowing through the first coil LP when Q1 is OFF, in other words, the current $i_{C1}$ flowing into the smoothing capacitor C1 is given by the following Equation 6. Wherein the AC power source is given by Em SIN $\omega(t + _{ON} + \phi/\omega)$ and the smoothing capacitor C1 has so large capacitance to be assumed as a short-circuit for the AC current. Em represents a sine-wave enveloped amplitude. $\omega$ represents an angular frequency. $T_{ON}$ represents the ON duration of a transistor. $\phi$ represents an initial phase.

[Equation 6]

$$i_{L1}(T_{OFF}) = i_{C1} = \frac{E_i}{\omega L6}\left\{1 - \cos\omega\left(t + T_{ON} + \frac{\phi}{\omega}\right)\right\}$$

$$+ \frac{1}{L6 + LP}(L6 \cdot i_{L1}(0) - LP \cdot i_1(0)) - \frac{E_i}{L6 + LP} \cdot t$$

The first term of the above Equation 6 denotes the charging current from the AC power source. Also the second term denotes the charging current by the initial current flowing through the circuit at the time of t1. The third term denotes the current to flow backward to the power source from the smoothing capacitor. Here, from the Equation 6 the currents $_{L1}(0)$ and i1(0) will be obtained as expressed as following Equations 7.

[Equations 7]

$$i_U(0) = \frac{E_s}{\omega LI}\left\{1 - \cos\ \omega\left(t + \frac{\phi}{\omega}\right)\right\}$$

$$i_U = \frac{E_1}{LP}T_{ON}$$

$$i_{CI} = \frac{E_s}{\omega(LI + LP)}\left\{1 - \cos\ \omega(t + T_{ON} + \frac{\phi}{\omega})\right\}$$

$$+ \frac{E_s}{LI + LP}\left[\frac{LI \cdot E_s}{\omega \cdot LI}\left\{1 - \cos\ \omega(t + T_{ON} + \frac{\phi}{\omega})\right\} - \frac{LP}{LP} \cdot E_1 \cdot T_{ON}\right] - \frac{E_1}{LP + LI} \cdot t$$

$$= \frac{E_s}{\omega(LI + LP)}\left\{1 - \cos\ \omega(t + T_{ON} + \frac{\phi}{\omega}) + 1 - \cos\ \omega\left(t + \frac{\phi}{\omega}\right)\right\}$$

$$- \frac{EI}{LI + LP} \cdot (t + T_{ON})$$

If the ON period $T_{ON}$ of the switching transistor Q1 is sufficiently short in compared to the period 20 mS (AC frequency 50 Hz) of the AC power source PS1. the approximation of the following Equation 8 holds good.

[Equation 8]

$$\cos\ \omega(t + T_{ON} + \frac{\phi}{\omega}) = \omega\left(t + \frac{\phi}{\omega}\right)$$

Thus the following Equation 9 will be established.

[Equation 9]

$$i_{c1}(t) = \frac{2E_i}{\omega(Ll + LP)}\left\{1 - \cos\ \omega\left(t + \frac{\phi}{\omega}\right)\right\}$$

$$- \frac{E_1}{Ll + LP} \cdot (t + T_{ON})$$

The collector current $i_{C1}(t1)$ at the time $(t = t1)$ when the switching transistor is turned OFF and the capacitor charging current $i_{C1}(t)$ at the time $(t = t2)$ when the switching transistor is turned ON are obtained as shown below by substituting $t = 0$ and $t = T_{OFF}$, respectively, in the above Equation 9 for calculating the capacitor charging current $i_{C1}$.

[Equation 10]

$$i_{c1}(t1) = \frac{2E_i}{\omega(L + LP)}\{1 - \cos\ \phi\} - \frac{E_1}{Ll + LP}\cdot(T_{ON})$$

$$i_{c1}(t2) = i_{c1}(T_{OFF}) = \frac{2E_i}{\omega(Ll + LP)}\left\{1 - \cos\ \omega\left(T_{OFF} + \frac{\phi}{\omega}\right)\right\}$$

$$- \frac{E_1}{Ll + LP}\cdot(TOFF + T_{ON})$$

In the above Equation 10 the first term shows the charging current of the smoothing capacitor when the switching transistor Q1 is OFF and the second term shows the discharging current. If a value of the first term becomes larger than a value of the second term at the time when the AC power source is large, the diodes DB1 and D6 are turned ON and the charging current flows into the smoothing capacitor C1. When the conditions for turning the diodes DB1. D6 at this time are obtained from following Equations 11.

[Equations 11]

$$1 - \cos\ \phi \geq \frac{\phi \cdot E_j}{2E_i} \cdot T_{ON}$$

$$\cos\ \phi \leq 1 - \frac{\omega \cdot E_j}{2E_i} \cdot T_{ON}$$

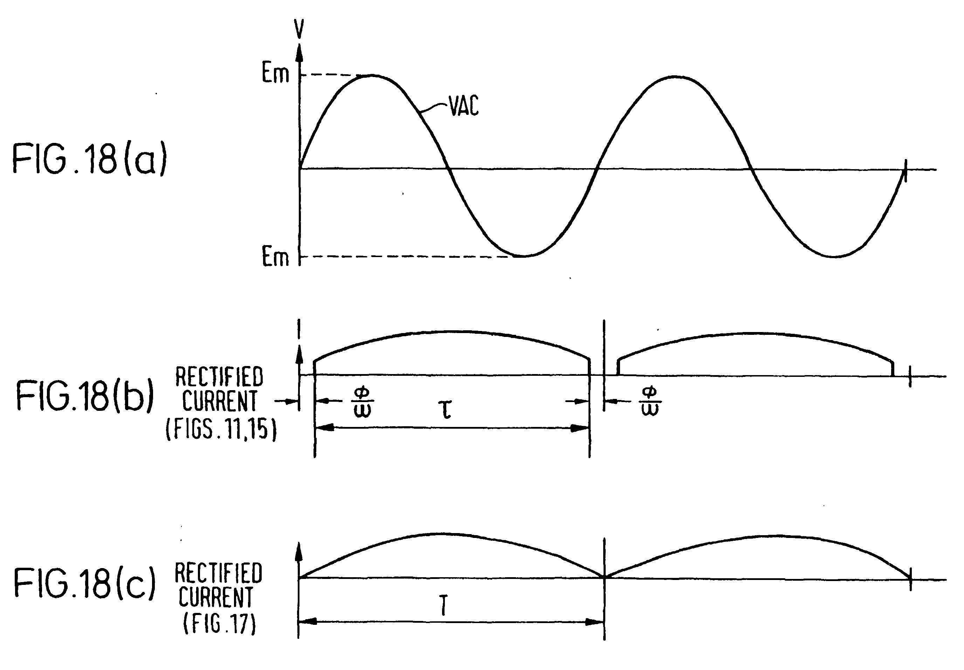

For the period with the initial phase deducted from one period $2\pi$ from the initial phase $\phi/\omega$ shown in the above equation, that is, the period from t1 to t2 shown in FIGURES 18(a), 18(b) and 18(c), the diodes DB1 and D6 are in the ON state. Thus the rectified current flows into the smoothing capacitor from the AC power source. This state is shown in FIGURES 18(a), 18(b) and 18(c).

The voltage across the smoothing capacitor C1 at this time depends on the relation with the voltage when the switching transistor Q1 is turned OFF and will become the nearly the same value as that of a conventional full-wave rectifier circuit.

In FIGURES 12(a) and 12(b) the voltage appearing on the node G in the OFF duration of the switching transistor Q1 is given by VA = Em/TOFF.

On the other hand, the voltage induced on the primary winding LP of the switching transformer T1 becomes VLP = V1 = $(T_{ON}/T_{OFF})$.

If the duty ratio of the ON/OFF operation of the switching transistor Q1 is 1 : 1, VA = 2VAC and VLP = v1 = $E_i$ and the forward bias voltage of the rectifier diode increases for VAC and deceases for V1, in case of the circuit in FIGURES 12(a) and 12(b).

Because of the relation of amplitude Em > V1 of the AC power source (VAC = Em SIN ωt), the voltage $E_i$ across the smoothing capacitor increases slightly higher than a conventional circuit; however, if load current is small, this difference is less than 10V and therefore, the voltage Ei across, the smoothing capacitor C1 of the circuit, as shown in FIGURE 1, will become almost equal to that of the circuit, as shown in FIGURE 11.

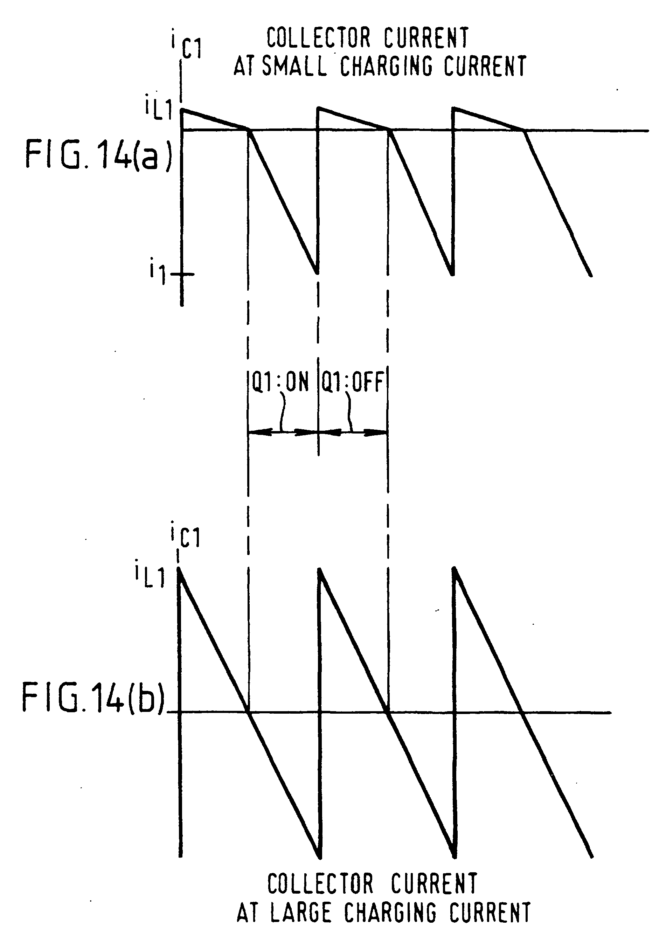

As a result of the operations described above, the rectified current width τ becomes large and it is possible to promote a power factor and reduce high-frequency current. FIGURES 14(a) and 14(b) are diagrams showing the waveforms of the collector current iC1 observed within the ON/OFF durations of the switching transistor Q1, which flows in the smoothing capacitor C1 at the time when the current $i_{L1}$ flowing through the first choke coil L6 is small (the initial state) and at the time when it becomes maximum.

While the switching transistor Q1 is kept in the ON state, the current $i_{L1}$ is flowing through the choke coil L1. It can be seen that if the current flowing through the choke coil L1 becomes large, the DC level of the collector current $i_{C1}$ becomes high and the smoothing capacitor C1 is charged. According to the bias condition of the rectifier diode DB1. the second side driving capacity will be improved.

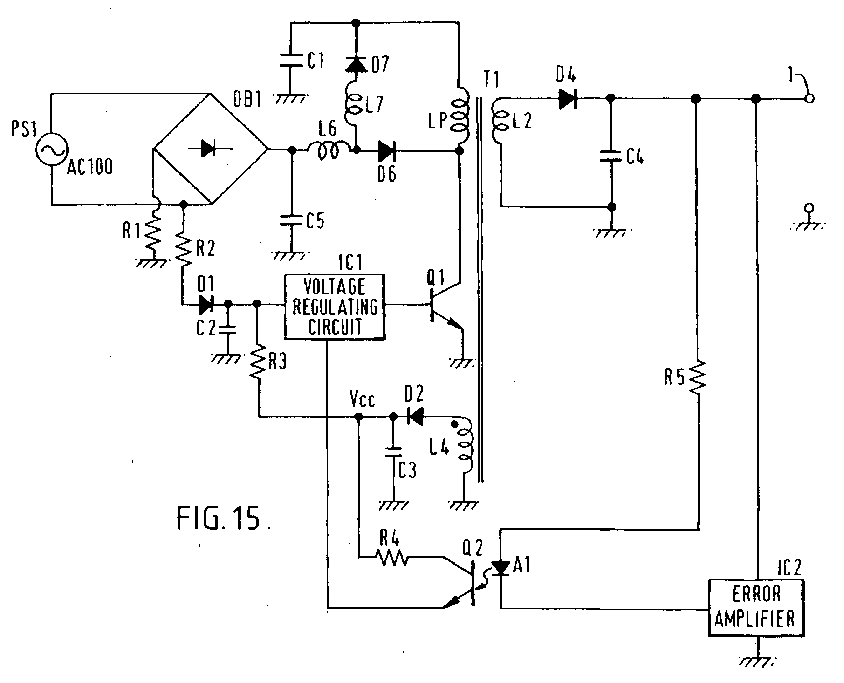

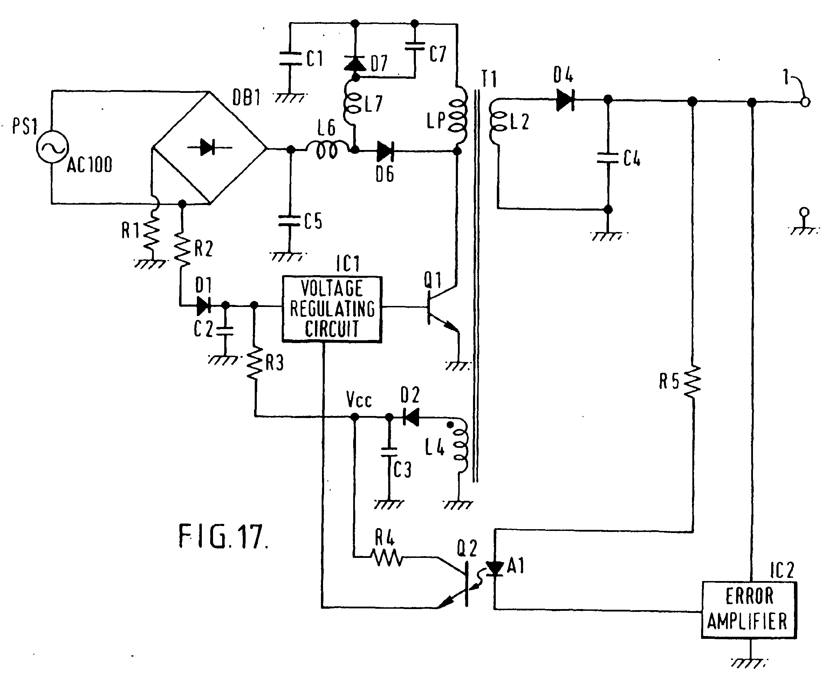

Referring now to FIGURES 15 and 17, modifications of the power circuit will be described.

In FIGURE 15 the diode 6 is connected between the choke coil L6 which is connected to the output of the full-wave rectifier circuit and the primary winding LP of the transformer T1 shown in FIGURE 11. a series circuit of the choke coil L7 and the diode D7 is provided in parallel with the diode D6 and the primary winding LP, and the other end of this series circuit is short-circuited to the reference potential via the capacitor C1. The other portion of the circuit configuration is the same as that of FIGURE 11. and the same elements will be explained by assigning the same reference numerals and letters.

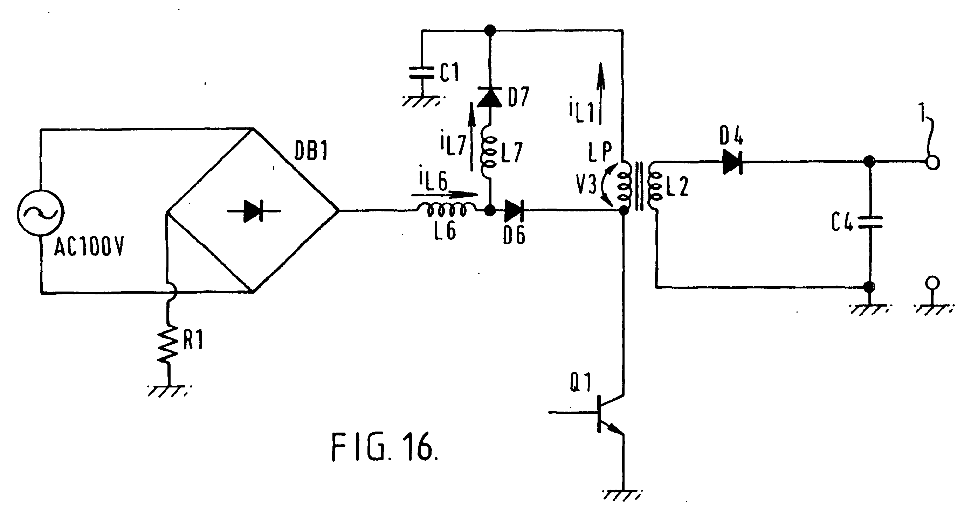

The operations of this circuit will be explained in reference to FIGURE 16.

The following Equation 12 is obtained by assuming that the input AC voltage VAC is given by VAC = EmSIN ω(t + TON + φ/ω).

[Equation 12]

$$i_{L6} = \frac{2E_a}{\omega(L+L6)}\left\{1 - \cos\ \omega\left(t + \frac{\phi}{\omega}\right)\right\}$$

$$-\frac{E_i}{L+L6}\cdot\left(t + \frac{L}{LP}T_{ON}\right) = i_{C1}$$

$$i_{L1} = \frac{L7}{LP+L7}\cdot i_{L6} - \frac{E_i \cdot T_{ON}}{LP+L7}$$

$$i_{L7} = i_{L6} - i_{L1} = \frac{LP}{LP+L7}\cdot i_{L6} + \frac{E_i \cdot T_{ON}}{LP+L7}$$

$$L = \frac{L7 \cdot LP}{L7 + LP}$$

In the circuit shown in FIGURE 16, when the switching transistor Q1 is in the OFF duration, the current $i_{L1}$ flowing through the first choke coil L6 also flows in the smoothing capacitor C1 through the primary winding LP of the switching transformer. Furthermore, the peak value of this current $i_{L1}$ changes at the same frequency as the AC power source frequency. Therefore, if the secondary side output current (negative current) is large, the current $i_{L1}$ becomes also large and thus ripples of power source period may appear in the output voltage in some cases.

Further, as can be seen from the Equation 9, if negative current is large, a corresponding charging current from the AC power source increases. Therefore, a value of the first choke coil L6 must be lowered. In this case, a switching transistor Q1 having sufficient values of electric ratings for the current, the voltage, etc., becomes necessary. The current $i_{L6}$ flowing through the first choke coil L6 when the switching transistor Q1 is kept OFF is branched into the current $i_{L7}$ flowing to the second choke coil and the current $i_{L1}$ flowing to the primary winding LP. As the amount of the current change of the primary winding can be suppressed by branching the current, a ripple factor by an inductance value can be reduced. Further, this effect will be explained quantitatively using the Equation 12.

An inductance L, a denominator of the first term of the Equation 12, is a value when the second choke coil L7 and the primary side winding inductance LP are in parallel with each other and therefore, even in case of the same LP value, a denominator becomes small and it is possible to cope with load increase without reducing a value of LP and raising ratings of the switching transistor Q1.

The circuit of FIGURE 15 is an example which may conform with the load increase, so that it is possible to compose such a power circuit without using the circuit parts typically conforming the increases of loads, inductors, switching elements with higher rating values.

FIGURE 17 shows a modification further to the example of FIGURE 15 wherein further elements are added so as to expand the "ON" phase angle. That is, in FIGURE 17, the expansion of the ON phase angle is achieved by connecting the capacitor C7 in parallel with the diode D7 of the series circuit. Thus the example of FIGURE 17 is able to obtain a rectified AC current (see FIGURE 18(c) for the whole period, regardless of the polarity of the diode.

In the circuits, as shown in FIGURES 11 and 15. there is the period $\phi/\omega$ in which no rectified current flows, as shown in FIGURE 18(b). But it is possible to apply the rectified current even in the period, as shown in FIGURE 18(c), by connecting a capacitor in parallel with a diode.

As described above, the present invention can provide an extremely preferable power circuit to accomplish the improvement of the AC-DC conversion efficiency through the improvement of the power factor of AC power sources, that is, the suppression of the harmonic components by extending the "ON" duration of a rectifier diode.

**Claims**

1. A power circuit for a television set, the circuit comprising:

input means (PS1) for receiving an AC power supply voltage from an AC power line;
a rectifier circuit (DB1) coupled to the input means (PS1) for rectifying the AC power supply voltage and operable to output a rectified voltage via an output terminal;
a flyback transformer (T4) including at least a winding having first and second ends;
a voltage stabilising circuit (10) operable to produce a stabilised voltage (EB) from the rectified voltage output from the output terminal of the rectifier circuit (DB1);
means for supplying the stabilised voltage (EB) from the voltage stabilising circuit to the first end of the primary winding of the flyback transformer (T4);
a horizontal output transistor (Q21) coupled to the second end of the winding of the flyback transformer (T4);
a driving transformer (T2) having an input winding (LD1) provided for receiving horizontal periodic driving pulses, and first (LD2) and second (L10) output windings, whereby the first output winding (LD2) is provided for controlling switching of the output transistor (Q21);
a pulse transformer (T3) having primary (L11) and secondary (L12) windings, whereby the primary winding (L11) is electrically connected to the second output winding (L10) of the driving transformer (T2), the first end of the secondary winding (L12) is coupled to the output terminal of the rectifier circuit (DB1) and the second end of the secondary winding (L12) is connected via a smoothing capacitor (C1) to a reference potential; whereby said smoothing capacitor (C1) and said secondary winding (L12) of the pulse transformer (T3) are operative to generate an AC signal responsive to the drive pulse across the primary winding (L11) of the pulse transformer (T3) such that electric power is supplied to the stabilised power circuit (10) from the smoothing capacitor (C1) via the secondary winding (L12) of the pulse transformer (T3) or from the output of the rectifier diode (DB1).

**Patentansprüche**

1. Stromversorgungsschaltung für ein Fernsehgerät, wobei die Schaltung umfasst:

eine Eingabevorrichtung (PS1), die eine Wechselstrom-Versorgungsspannung aus einem Wechselstromnetz aufnimmt;
eine Gleichrichterschaltung (DB1), die mit der Eingabevorrichtung (PS1) verbunden ist und die Wechselstrom-Versorgungsspannung gleichrichtet, und die so betreibbar ist, dass sie eine gleichgerichtete Spannung über einen Ausgangsanschluss ausgibt;
einen Zeilentransformator (T4), der mindestens eine Wicklung umfasst, die ein erstes Ende und ein zweites Ende aufweist;
eine Spannungsstabilisierschaltung (10), die zum Erzeugen einer stabilisierten Spannung (EB) betreibbar ist, die aus der gleichgerichteten Spannung stammt, die am Ausgangsanschluss der Gleichrichterschaltung (DB1) ausgegeben wird;
eine Vorrichtung, die die stabilisierte Spannung (EB) von der Spannungsstabilisierschaltung dem ersten Ende der Primärwicklung des Zeilentransformators (T4) zuführt;
einen Zeilenausgangstransistor (Q21), der an das zweite Ende der Wicklung des Zeilentransformators (T4) angeschlossen ist;
einen Ansteuertransformator (T2), der eine Eingabewicklung (LD1) aufweist, die der Aufnahme periodischer Zeilenansteuerimpulse dient, und eine erste (LD2) und eine zweite (L10) Ausgabewicklung, wobei die erste Ausgabewicklung (LD2) dafür vorhanden ist, das Schalten des Ausgangstransistors (Q21) zu steuern;
einen Impulstransformator (T3), der eine Primärwicklung (L11) und eine Sekundärwicklung (L12) aufweist, wobei die Primärwicklung (L11) elektrisch mit der zweiten Ausgabewicklung (L10) des Ansteuertransformators (T2) verbunden ist, das erste Ende der Sekundärwicklung (L12) mit dem Ausgangsanschluss der Gleichrichterschaltung (DB1) verbunden ist, und das zweite Ende der Sekundärwicklung (L12) über einen Glättungskondensator (C1) an einem Bezugspotential liegt, und der Glättungskondensator (C1) und die Sekundärwicklung (L12) des Impulstransformators (T3) bewirken, dass ein Wechselspannungssignal abhängig von den Ansteuerimpulsen an der Primärwicklung (L11) des Impulstransformators (T3) erzeugt wird,

so dass der stabilisierten Stromversorgungsschaltung (10) elektrische Energie vom Glättungskondensator (C1) über die Sekundärwicklung (L12) des Impulstransformators (T3) oder vom Ausgang der Gleichrichterdiode (DB1) zugeführt wird.

**Revendications**

1. Un circuit de puissance pour un poste de télévision, le circuit comprenant :

   des moyens d'entrée (PS1) pour recevoir une tension d'alimentation de puissance en courant alternatif à partir d'une ligne de puissance en courant alternatif ;
   un circuit redresseur (DB1) couplé aux moyens d'entrées (PS1) pour redresser la tension d'alimentation de puissance en courant alternatif et pouvant être actionné pour délivrer une tension redressée par l'intermédiaire d'une borne de sortie ;
   un transformateur de sortie lignes (T4) comprenant au moins un enroulement présentant de première et seconde extrémités ;
   un circuit de stabilisation de tension (10) pouvant être actionné pour produire une tension stabilisée (EB) à partir de la tension redressée sortant de la borne de sortie du circuit redresseur (DB1) ;
   des moyens pour appliquer la tension stabilisée (EB) issue du circuit de stabilisation de tension à la première extrémité de l'enroulement primaire du transformateur de sortie lignes (T4) ;
   un transistor de sortie lignes (Q21) couplé à la seconde extrémité de l'enroulement du transformateur de sortie lignes (T4) ;
   un transformateur de commande (T2) présentant un enroulement d'entrée (LD1) prévu pour recevoir des impulsions horizontales périodiques de commande, et de premier (LD2) et second (L10) enroulements de sortie, de sorte que le premier enroulement de sortie (LD2) est prévu pour commander la commutation du transistor de sortie (Q21),
   un transformateur d'impulsions (T3) présentant des enroulements primaire (L11) et secondaire (L12), de sorte que l'enroulement primaire (L11) est relié électriquement aux seconds enroulements de sortie (L10) du transformateur de commande (T2), la première extrémité de l'enroulement secondaire (L12) est couplée à la borne de sortie du circuit redresseur (DB1) et la seconde extrémité de l'enroulement secondaire (L12) est reliée par l'intermédiaire d'un condensateur de lissage (C1) à un potentiel de référence, de sorte que

   ledit condensateur de lissage (C1) et ledit enroulement secondaire (L12) du transformateur d'impulsions (T3) sont actionnables pour produire un signal en courant alternatif sensible à l'impulsion de commande aux bornes de l'enroulement primaire (L11) du transformateur d'impulsions (T2) de manière telle qu'une puissance électrique soit appliquée au circuit de puissance stabilisée (10) en provenance du condensateur de lissage (C1) par l'intermédiaire de l'enroulement secondaire (L12) du transformateur d'impulsions (T3) ou en provenance de la sortie de la diode redresseuse (DB1).

FIG. 1.
( PRIOR ART )

EP 0 837 546 B1

FIG. 2.
(PRIOR ART)

EP 0 837 546 B1

(ALL PRIOR ART)

RECTIFIED OUTPUT VOLTAGE $E_i$

FULL-WAVE RECTIFIED OUTPUT

FIG. 3(a)

VAC

$\tau$

T

FIG. 3(b)

PULSATING AC CURRENT

T

FIG. 3(c)

COLLECTOR CURRENT $i_{cp}$

$i_{CP}$

FIG. 3(d)

DRAIN-TO-SOURCE CURRENT $i_{ds}$

$i_{DS}$

$i_{DS} > 2i_{cp}$

SECONDARY-SIDE RECTIFIED OUTPUT VOLTAGE $E_B$

FIG. 3(e)

FIG. 4(a)

FIG. 4(b)

EP 0 837 546 B1

FIG. 5.

MODE A

Q1:ON , DB1:OFF

FIG.6(a)

MODE B

Q1:OFF , DB1:OFF

FIG.6(b)

MODE C

PS1

DB1

C1

i4

V3

D4

i1

C4

Q1

Q1:ON , DB1:ON

FIG.6(c)

MODE D

PS1

DB1

C1

i d

V3

D4

i2

C4

Q1

Q1:OFF, DB1:ON

FIG.6(d)

FIG. 7(a)

VOLTAGE V3 INDUCED ON TERTIARY WINDING L1

Q1:ON , Q1:OFF

FIG. 7(b)

FIG.8(a)

FIG.8(b) VOLTAGE V3 INDUCED ON TERITARY WINDING L1

FIG.8(c)

VAC

V32

V31

t1 t2 t3 t4 t5 t6

Q1: ON
VAC−V32 < Ei

Q1: OFF
VAC + V31 ≧ Ei

EP 0 837 546 B1

FIG. 9.

EP 0 837 546 B1

FIG.10

EP 0 837 546 B1

FIG. 11.

EP 0 837 546 B1

FIG.12(a)

FIG.12(b)

FIG.13(a)  CURRENT i1

FIG.13(b)  CURRENT i2

FIG.13(c)  CURRENT iL1

FIG.13(d)  COLLECTOR VOLTAGE

t1

V3

V32

0

V31

T

Q1:ON , Q1:OFF

$i_{C1}$

COLLECTOR CURRENT
AT SMALL CHARGING CURRENT

$i_{L1}$

FIG.14(a)

$i_1$

Q1:ON  Q1:OFF

$i_{C1}$

$i_{L1}$

FIG.14(b)

COLLECTOR CURRENT
AT LARGE CHARGING CURRENT

FIG.15.

EP 0 837 546 B1

FIG. 16.

EP 0 837 546 B1

FIG.17.

FIG.18(a)

FIG.18(b) RECTIFIED CURRENT (FIGS.11,15)

FIG.18(c) RECTIFIED CURRENT (FIG.17)

EP 0 837 546 B1